# FASCICULE DE BREVET EUROPEEN

(11) **EP 2 016 301 B1**
(45) Date de publication et mention de la délivrance du brevet: **11.08.2010**
(21) Numéro de dépôt: 07731909.3
(22) Date de dépôt: 19.04.2007
(51) Int. Cl.: F16D 23/06

(54) **DISPOSITIF DE SYNCHRONISATION A LEVIERS REVERSIBLES**
SYNCHRONISIERVORRICHTUNG MIT UMKEHRHEBEL
REVERSIBLE LEVER SYNCHRONISATION DEVICE

(30) Priorité: 10.05.2006 FR 0651666
(43) Date de publication de la demande: 21.01.2009
(73) Titulaire: Renault S.A.S., 92100 Boulogne-Billancourt (FR)
(72) Inventeur: CHOUCHANA, Richard, F-92300 Levallois-Perret (FR); FOUQUET, Guillaume, F-76100 Rouen (FR); VIRMAUX, Franck, F-27400 Montaure (FR)
(86) Numéro de dépôt international: PCT/FR2007/051133
(87) Numéro de publication internationale: WO 2007/128928

(56) Documents cités:
- EP-A2- 0 754 874
- FR-A1- 2 390 633
- FR-A1- 2 795 144
- JP-A- 2005 113 975

## Description

La présente invention concerne un dispositif de synchronisation à leviers réversibles.

Plus précisément, elle concerne un dispositif de synchronisation pour boîte de vitesses, comprenant au moins un levier réversible, qui permet de repousser un anneau de synchronisation en direction d'un même pignon fou de boîte de vitesses, sous la poussée d'un baladeur, déplacé dans deux directions opposées par le mécanisme de commande interne de la boîte.

Un tel dispositif trouve une application privilégiée, mais non exclusive, sur une boîte de vitesses où un rapport de marche avant est placé sur la même ligne de vitesses que la marche arrière, et où la marche arrière est « freinée », au moyen du disposit if de synchronisat ion associé à ce rapport de marche avant.

Une disposition comparable est illustrée par la publication JP 2005113975, qui montre un moyeu fixé sur l'arbre de la boîte, au moins un levier réversible, prenant appui sur le moyeu, un anneau de synchronisat ion adossé à un pignon f ou de la boîte, et un baladeur capable de repousser l'anneau en direction du pignon, par l'intermédiaire du levier réversible.

Selon cette publication, le baladeur peut être déplacé dans l'une ou l'autre de deux directions opposées, par le mécanisme de commande interne de la boîte. Dans les deux directions, le baladeur place le levier en appui contre l'anneau, de sorte que ce dernier agit sur le même pignon f ou associé. Déplacé en direction du pignon fou, le baladeur repousse le levier radialement vers l'intérieur, contre l'anneau de synchronisation, qui se plaque contre le pignon, de manière à synchroniser l'arbre avec ce dernier, puis les dents du baladeur traversent celles de l'anneau, pour venir craboter celles du pignon. Déplacé à l'écart du point mort dans la direction opposée, le baladeur repousse aussi les leviers contre l'anneau. Toutefois, dans cette direction, le baladeur ne crabote aucun pignon de vitesses, et son action se limite à freiner l'arbre, car l'engagement de la marche arrière est effectué dans une autre partie de la boîte. En résumé, grâce au fonctionnement « réversible » des leviers, le même anneau de synchronisation est utilisé pour « synchroniser » un rapport de marche avant, et pour « freiner » la marche arrière.

Au montage, les leviers réversibles disposent d`un jeu de fonctionnement entre le baladeur et le moyeu, qui leur permet de trouver leur appui sur l'anneau, dans les deux sens de déplacement du baladeur. Cependant, les leviers réversibles doivent toujours être bien plaqués sous le baladeur, pour repousser correctement l'anneau. Aux régimes élevés, la force centrifuge assure ce plaquage. En revanche, aux régimes peu élevés, notamment lors de la synchronisation, ou du « freinage » de la marche arrière, un système de rappel élastique des leviers vers l'extérieur, peut devenir nécessaire, pour éviter tout risque de craquement, lors de l'engagement d'un rapport.

Dans ce but, l'invention prévoit une disposition particulière de ressorts, entre le moyeu, l'anneau de synchronisation, et les leviers réversibles. Ces ressorts sont en particulier localisés entre l'anneau et les leviers réversibles.

Les ressorts sont const it ués de rubans d'aciers incurvés et aplatis à leurs extrémités, et ces extrémités sont repliées sous les extrémités des leviers.

D'autres caractéristiques et avant ages de la présente invention ressort iront clairement à la lecture de la description suivante, d'un mode de réalisation non limitatif de celle-ci, en se reportant aux dessins sur lesquels :
- la figure 1 est une vue éclat ée du disposit if proposé,
- et les figures 2, 3 et 4 sont respect ivement une vue de f ace, une coupe selon BE ou CF de la figure 2, et une vue en perspective du dispositif assemblé.

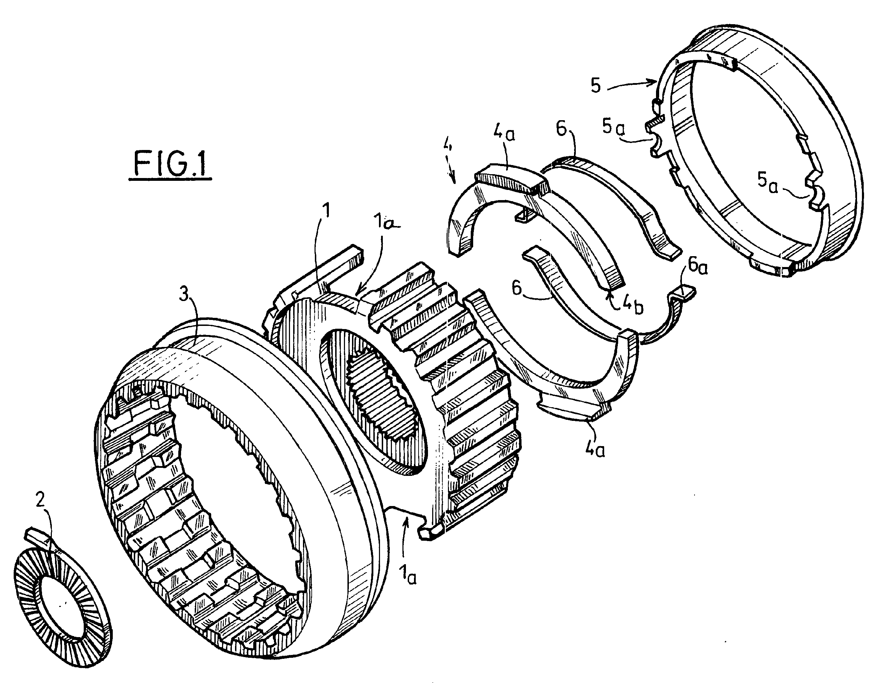

La figure 1 montre un dispositif de synchronisation comprenant un moyeu 1, immobilisé en rotation sur un arbre de boîte de vitesses (non représenté) par ses cannelures internes. Le moyeu 1 est arrêté axialement sur celui-ci par un anneau d'arrêt 2. Un baladeur 3 entoure le moyeu 2. Le dispositif comporte deux leviers réversibles 4. Les leviers 4 en forme d'arc de cercle, présentent des épaulements 4a, engagés dans les flancs 1a du moyeu 1. Les leviers 4 sont susceptibles d'être repoussés par le baladeur 3, contre un anneau 5, destiné à synchroniser un pignon de vitesses, ou pignon f ou (non représenté), avec l'arbre de la boîte, ou simplement à freiner l'arbre. Enf in, le dispositif comporte deux ressorts 6, coopérant avec les deux leviers réversibles 4. Les ressorts 6 sont destinés à rappeler les leviers 4 en position de repos vers l'extérieur, notamment lorsque le baladeur 3 revient au point mort. Ils sont placés entre l'anneau 5 et les leviers 4, et localisés axialement entre l'anneau et un flanc 1a du moyeu 1. Par ailleurs, ils sont indexés en position vis-à-vis de l'anneau, par des ergot s 5a de celui-ci.

Dans l'exemple de réalisation non limitatif illustré par les figures, le dispositif présente deux leviers réversibles 4, disposés en position symétrique, et diamétralement opposée, autour du moyeu. Ce disposit if comporte aussi deux ressorts 6. Les ressorts 6 et les leviers 4, sont disposés de part et d'autre de deux ergots 5a de l'anneau 5.

Les deux ressorts 6, en f or me de rubans incurvés, présentent à chaque extrémité un rebord aplati 6a, en appui contre une extrémité 4b d'un levier 4. Ils sont constitués, de préférence, de rubans d'aciers incurvés et aplatis à leurs extrémités 6a. Ces extrémités 6a sont localisées entre les extrémités 4a des leviers 4, et les ergot s 5a faisant saillie axialement sur l'anneau 5.

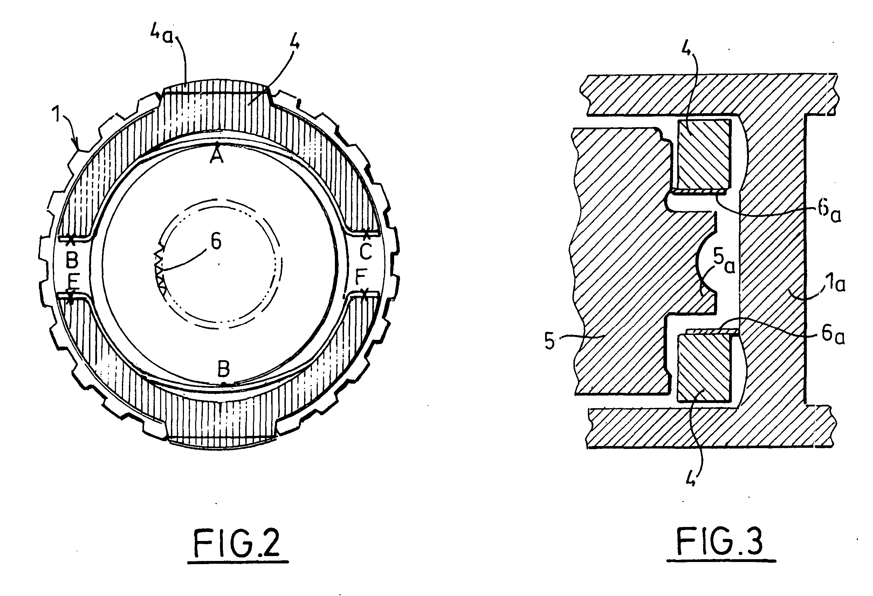

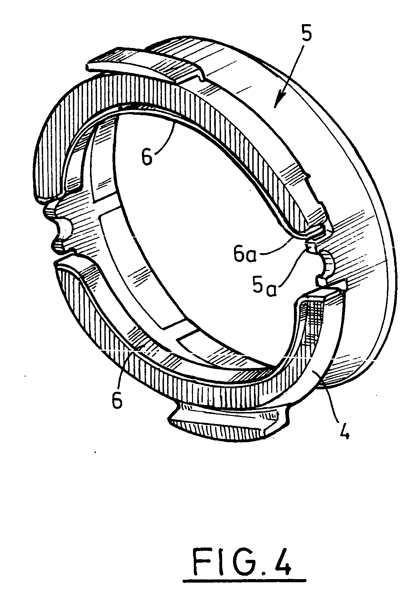

Les figures 2 et 4 représentent le dispositif en position de repos. La figure 2, montre les points de contact A et D entre le moyeu et ies ressorts dans cette position, et les points d'appui B, C, E, F des ressorts aux extrémités 4a des leviers 4. Chaque ressort 6 dispose au repos d'un point d'appui central sur le moyeu, et de deux points d'appui sur un levier par ses extrémités. Les contraintes des ressorts 6 exercées entre les points d'appui A et D des ressorts sur le moyeu 1, et de leurs points d'appui B, C, E, F sur les extrémités 4a des leviers, rappellent en permanence radialement ces derniers vers le baladeur 1, notamment lors du retour du baladeur au point mort. Les ressorts assurent une parfaite mise en position des leviers. Cette disposition permet d'établir l'appui entre les leviers et l'anneau au point mort, en vue de la phase de synchronisation suivante. Ils sont alors positionnés, pour pouvoir assurer une élévation progressive du couple transmis entre l'anneau et ie pignon, lors de celle-ci.

Conformément aux enseignements de la publication JP 2005113975, la position d'appui des leviers entre le baladeur et l'anneau peut être différente, selon le sens de déplacement du baladeur, par exemple en vue de préparer l'engagement d'un rapport de marche avant ou d'un rapport de marche arrière.

Toutefois la disposition décrite dans cette publication ne limite pas l'application de l'invention. La structure et l'agencement des ressorts proposés par l'invent ion, sont en ef f et applicables à d'autres dispositifs de synchronisation « à leviers réversibles » non décrits, en vue de garantir dans des conditions comparables, la bonne synchronisation d'un pignon, et l'absence de craquement, lors des passages de vitesses.

Enfin, Il faut souligner que ces ressorts sont de fabrication particulièrement simple et peu coûteuse, par exemple par simple déroulage d'un ruban d'acier ressort, suivi d'un cambrage dans le sens du déroulage et du pliage des extrémités.

## Revendications

1. Dispositif de synchronisation pour boîte de vitesses, comprenant un moyeu (1), un anneau de synchronisation (5) et au moins deux leviers réversibles (4) agencés de manière à repousser un anneau de synchronisation (5) en direction d'un même pignon fou sous la poussée d'un baladeur déplacé dans deux directions opposées par le mécanisme de commande interne de la boîte, et des moyens de rappel des leviers en position de repos, **caractérisé en ce que** les moyens de rappel se présentent sous la forme de ressorts (6), localisés entre l'anneau (5) et les leviers (4), constitués de rubans d'aciers incurvés et aplatis à leurs extrémités (6a), repliées sous les extrémités (4a) des leviers (4).

2. Dispositif de synchronisation selon la revendication 1, **caractérisé en ce que** chaque ressort (6) dispose au repos d'un point d'appui central sur le moyeu (1), et de deux points d'appui sur un levier (4) par ses extrémités (6a).

3. Dispositif de synchronisation selon la revendication 1 ou 2, **caractérisé en ce que** les ressorts (6) sont localisées axialement entre l'anneau (5) et une partie (1a) du moyeu (1).

4. Dispositif de synchronisation selon la revendication 1, 2 ou 3, **caractérisé en ce que** les extrémités (6a) des ressorts (6) sont localisées entre les extrémités (4a) des leviers et des ergots (5a) faisant saillie axialement sur l'anneau.

5. Dispositif de synchronisation selon l'une des revendications précédentes, **caractérisé en ce qu'**il comporte deux ressorts (6) coopérant avec deux leviers réversibles (4) diamétralement opposés sur le moyeu (1).

6. Dispositif de synchronisation selon la revendication 4 ou 5, **caractérisé en ce que** les ressorts (6) et les leviers (4) sont disposés de part et d'autre des ergots (5a) de l'anneau.

## Claims

1. Synchromesh device for a transmission gearbox, comprising a hub (1), a synchromesh ring (5) and at least two reversible levers (4) designed to push a synchromesh ring (5) back toward one and the same idler pinion under the thrust of a sliding sleeve moved in two opposite directions by the control mechanism internal to the gearbox, and means of returning the levers to the rest position, **characterized in that** the return means are in the form of springs (6), located between the ring (5) and the levers (4), consisting of curved steel strips flattened at their ends (6a) which ends are bent under the ends (4a) of the levers (4).

2. Synchromesh device according to Claim 1, **characterized in that** each spring (6), when at rest, has a central point of contact with the hub (1), and two points of contact with a lever (4) via its ends (6a).

3. Synchromesh device according to Claim 1 or 2, **characterized in that** the springs (6) are located axially between the ring (5) and a part (1a) of the hub (1).

4. Synchromesh device according to Claim 1, 2 or 3, **characterized in that** the ends (6a) of the springs (6) are located between the ends (4a) of the levers and lugs (5a) that project axially from the ring.

5. Synchromesh device according to one of the preceding claims, **characterized in that** it comprises two springs (6) collaborating with two reversible levers (4) that are diametrically opposed on the hub (1).

6. Synchromesh device according to Claim 4 or 5, **characterized in that** the springs (6) and the levers (4) are positioned on each side of the lugs (5a) of the ring.

## Patentansprüche

1. Vorrichtung für die Synchronisation eines Schaltgetriebes, mit einer Nabe (1), einem Synchronisationsring (5) und wenigstens zwei rückstellbaren Hebeln (4), die in der Weise angeordnet sind, dass sie einen Synchronisationsring (5) unter dem Schub einer Schaltgabel, die durch den internen Steuermechanismus des Getriebes in zwei zueinander entgegen gesetzten Richtungen verlagert wird, in Richtung desselben beweglichen Ritzels wegdrängen, sowie Mitteln zum Zurückstellen der Hebel in die Ruhestellung, **dadurch gekennzeichnet, dass** die Rückstellmittel die Form von Federn (6) haben, die sich zwischen dem Ring (5) und den Hebeln (4) befinden und aus gekrümmten und an ihren Enden (6a) abgeflachten Stahlbändern gebildet sind, die unter die Enden (4a) der Hebel (4) umgebogen sind.

2. Synchronisationsvorrichtung nach Anspruch 1, **dadurch gekennzeichnet, dass** jede Feder (6) im Ruhezustand durch ihre Enden (6a) einen mittigen Abstützpunkt auf der Nabe (1) und zwei Abstützpunkte an einem Hebel (4) bildet.

3. Synchronisationsvorrichtung nach Anspruch 1 oder 2, **dadurch gekennzeichnet, dass** sich die Federn (6) axial zwischen dem Ring (5) und einem Teil (1a) der Nabe (1) befinden.

4. Synchronisationsvorrichtung nach Anspruch 1, 2 oder 3, **dadurch gekennzeichnet, dass** die Enden (6a) der Federn (6) zwischen den Enden (4a) der Hebel und Zapfen (5a), die auf dem Ring axial vorstehen, vorhanden sind.

5. Synchronisationsvorrichtung nach einem der vorhergehenden Ansprüche, **dadurch gekennzeichnet, dass** sie zwei Federn (6) aufweist, die mit zwei rückstellbaren Hebeln (4), die auf der Nabe (1) diametral entgegengesetzt vorhanden sind, zusammenwirken.

6. Synchronisationsvorrichtung nach Anspruch 4 oder 5, **dadurch gekennzeichnet, dass** die Federn (6) und die Hebel (4) beiderseits der Zapfen (5a) des Rings angeordnet sind.
